Europäisches Patentamt

European Patent Office

Office européen des brevets

(19)

(11) Publication number: **0 075 601**
**B1**

(12) **EUROPEAN PATENT SPECIFICATION**

(45) Date of publication of patent specification: **30.03.88**

(21) Application number: **82901002.4**

(22) Date of filing: **01.04.82**

(86) International application number:
**PCT/JP82/00094**

(87) International publication number:
**WO 82/03515 14.10.82 Gazette 82/25**

(51) Int. Cl.⁴: **H 04 J 4/00, H 04 J 3/00, H 04 L 27/20, H 04 B 7/155**

(54) **TIME-SHARING COMMUNICATING SYSTEM.**

(30) Priority: **07.04.81 JP 52167/81**
**22.06.81 JP 96313/81**
**22.09.81 JP 149962/81**
**16.11.81 JP 183367/81**
**17.12.81 JP 204030/81**
**28.12.81 JP 211151/81**

(43) Date of publication of application:
**06.04.83 Bulletin 83/14**

(45) Publication of the grant of the patent:
**30.03.88 Bulletin 88/13**

(84) Designated Contracting States:
**DE FR GB NL**

(56) References cited:
**EP-A-0 056 277**
**JP-U-55 098 064**

**WISSENSCHAFTLICHEN BERICHTE AEG-TELEFUNKEN, vol. 51, no. 4/5, April/Mai 1978, BERLIN (DE); S.Börner: "Modems für Digitalübertragung im Burstbetrieb über Nachrichtensatelliten", page 214, 215.**

(73) Proprietor: **FUJITSU LIMITED**
**1015, Kamikodanaka Nakahara-ku**
**Kawasaki-shi Kanagawa 211 (JP)**

(72) Inventor: **SASAKI, Susumu**
**1-8-17, Fujigaya Kugenuma**
**Fujisawa-shi Kanagawa 251 (JP)**

(74) Representative: **Muir, Ian R. et al**
**HASELTINE LAKE & CO. Hazlitt House 28**
**Southampton Buildings Chancery Lane**
**London WC2A 1AT (GB)**

(56) References cited:

**ELECTRONICS AND COMMUNICATIONS IN JAPAN, vol. 55-B, no. 6, June 1972, WASHINGTON (US); T. Okamoto et al.: "Design and performance of the carrier-pulse transmission system with the approximate zero-crossing waveform", page 47-55.**

## Description

This invention relates to a time division communication system, particularly to a burst signal generating system wherein, when generating the burst signal by switching a modulated wave with band limitation in a base band, generation of undesired signals is suppressed.

In a time division communication system, a modulated signal, such as a phase modulated or an amplitude modulated signal, is transmitted in the form of a burst signal because such a signal is transmitted in its own assigned time slit. Therefore, in such a time division communication system, a switch is usually provided after a modulator and a burst signal is generated by switching the modulated wave with ON/OFF control using a rectangular signal. Such a burst signal is then inserted into its own assigned time slot.

However, where such switching of the modulated wave is carried out by the switch, undesired signals are generated because of the pulse waveform of the burst modulated wave at the leading and rear edges of the burst signal. The undesired signal is generated as a result of the pulse waveform. Consequently, there is a wide spectrum spread that causes some interference with other communications. For example, if a plurality of time division systems in different frequencies are co-existing in a time division arrangement, a widely spreading interference signal spectrum may have an adverse influence on the other time division systems.

The spread of the spectrum distribution can easily be limited by using a filter and it has been considered to eliminate the undesired signal by connecting a band-pass-filter with narrow frequency pass-band as a succeeding stage of the switch circuit.

However, this method is naturally not capable of eliminating undesired signals lying within the pass-band of the band-pass-filter and moreover, as is well known, it is difficult to produce a filter which assures very narrow band limitation in the RF (radio frequency) range.

Thus, it has been considered to execute band limitation in the intermediate frequency and then convert it up to the radio frequency. But this method also has a problem. Namely, when the bit rate is high relative to the carrier frequency of RF, undesired signals can be easily eliminated because the main lobe is isolated from the carrier frequency, but when the bit rate is low, such undesired signals cannot easily be eliminated because the main lobe is in the vicinity of the carrier frequency. Therefore, it has been considered to execute band limitation in the base band frequency and then convert this frequency up to radio frequency by the heterodyne method.

Moreover, undesired signals resulting from the switching operation can easily be reduced by the simple method of smoothing the rectangular wave signal for controlling the ON and OFF of the burst signal.

However, it is difficult in this method to shape the waveform at the rising and falling portions because a diode is usually employed as the switching element and in some cases, data is missing, level down occurs, and burst interference occurs at the extremely gentle rising and falling portions.

EP—A—0 056 277, which may relate to the state of the art, so far as France and West Germany are concerned, by virtue of Article 54(3) EPC, Article 54(4) EPC and Article 89 EPC, concerns the elimination of spurious components resulting from burst control in a TDMA system.

It is an object of the present invention to provide a system which can efficiently reduce undesired signals by making use of the amplitude characteristics of the modulated signal.

Moreover, it is another object of the present invention to provide a system which can easily shape the ON/OFF signal waveform for the switching operation and reduce undesired signals resulting from the switching.

According to the present invention, there is provided a time division communication system wherein modulation input data is phase modulated or amplitude modulated and thereafter is transmitted as a burst signal in its own assigned time slot characterised in that particular data codes, independent of and not derived from the modulation data, are added to the modulation input data such that the modulated waveform has substantially 100% amplitude modulation at the points corresponding to the front and rear ends of the transmitted data burst signal and that the modulated signal is switched at these 100% amplitude modulation points, in response to an ON/OFF switching signal, and inserted in its assigned time slot.

Even when this invention is applied to a multiphase modulation system, of 4-phases or more, changing the offset voltage of the modulator driving circuit, only before and after said burst signal, the switching is still carried out at the point where the amplitude of modulated wave becomes zero.

In an embodiment of the present invention, an input signal to a modulator driving circuit may be intercepted or regulated to a constant voltage at least in the period corresponding to the front and rear edges of the corresponding data burst, and a modulator offset voltage is changed such that switching occurs at the point where the amplitude of said modulated wave becomes zero.

Another embodiment of the present invention uses a signal, which is obtained via the amplifier or buffer having a low output impedance after the rising and falling edges of the ON/OFF signal is shaped by the filter circuit, as the switching signal for obtaining said burst signal, in order to inhibit generation of unwanted waves at the time of the switching operation.

A further embodiment of the present invention also uses, as said switching signal, a signal obtained by combining the signals obtained by shaping the rectangular ON/OFF signal by an integrating circuit and the signal obtained by differentiating the falling edge of said ON/OFF signal.

For a better understanding of the present invention reference will now be made by way of example to the accompanying drawings, in which:

Fig. 1 shows waveforms for explaining the switching operation of a time division transmission system;

Fig. 2 is a block diagram of a radio system to which the present invention is applied;

Fig. 3 explains particular code inserting procedures and timing of switching operations in relation to the present invention;

Fig. 4 and Fig. 5 show respectively waveforms in the time and frequency domain when 100% amplitude modulation occurs at the points separated by the period of one bit from the front and rear edges of the burst signal and, the undesired signals;

Fig. 6 and Fig. 7 show respectively waveforms when 100% amplitude variation occurs at the points separated by the period of two bits from the front and rear edges of the burst signal and, the undesired signals;

Fig. 8 shows a frequency vs. voltage characteristic of a low-pass-filter circuit for band limitation;

Fig. 9 is a block diagram of the main circuit of a 4-phases phase modulation circuit;

Fig. 10 shows waveforms when switching is carried out for a 4-phases phase modulated wave;

Fig. 11 shows the structure of a phase shift circuit;

Fig. 12 shows the structure of a modulator driving circuit to which the present invention is applied;

Fig. 13 explains the control timing of a driver circuit in relation to the present invention and a burst signal waveform;

Fig. 14 shows the structure of a circuit which interrupts supply of the input signal to a driver circuit and controls the offset voltage;

Fig. 15 shows a schematic diagram where a digital filter is used in the preceding stage of a driver circuit;

Fig. 16 and Fig. 17 show switching circuits for generating the burst signal; and

Fig. 18 shows waveforms at the main portions of the switching circuit shown in Fig. 17.

An embodiment of the present invention is explained hereunder with reference to the attached drawings.

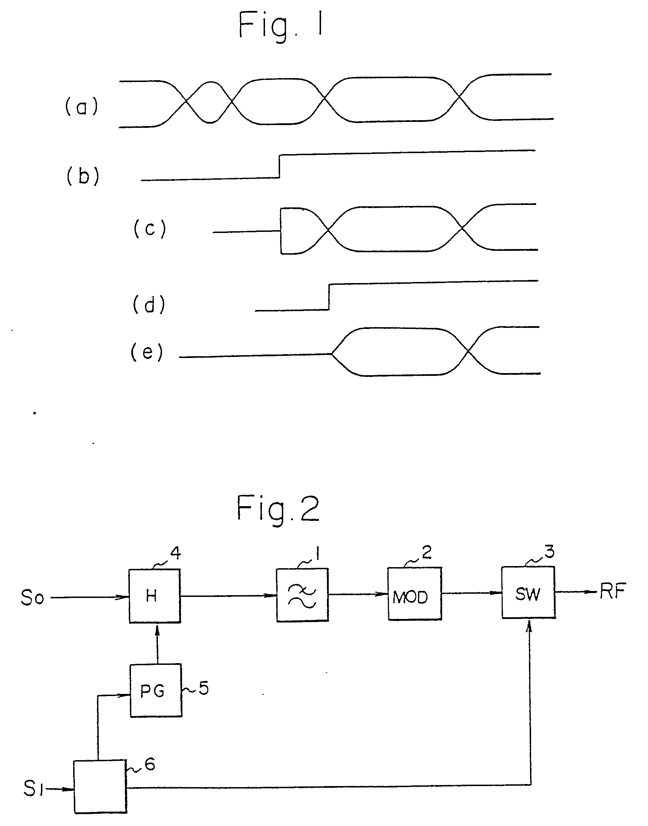

Fig. 1 shows waveforms for explaining the switching operation in a time division transmission system. Fig. 1(a) shows the waveform (envelopoe) of a signal having been subjected to 2-phase modulation by band-limited modulation input data, as an example of a modulated wave having an amplitude element. Although omitted from the figure, each envelope waveform includes an RF signal having the phases of 0,π. When the ON/OFF signal controlling signal has the timing phase shown in Fig. 1(b), the output of the switch, controlled by said ON/OFF signal and having the modulated wave as input, is shown in Fig. 1(c). In this case, the rising portion becomes sharp and a pulse waveform characteristic is generated. On the other hand, if the ON/OFF signal has a timing phase as shown in Fig. 1(d), there is almost no carrier at this switching time, the amplitude element is zero and therefore an output as shown in Fig. 1(e) can be obtained after the switching operation and thereby generation of a pulse-shaped waveform response can be prevented.

However, when the modulator output is continuous wave, it does not always have the waveform as shown in Fig. 1(e) at the front and rear edges of the burst signal.

Thus, in accordance with the present invention, particular codes (bits) are previously added to the input data to be modulated and then the modulated wave signal is switched, such that effectively 100% amplitude modulation is forcibly carried out. Thereby, a waveform such as shown in Fig. 1(e) can always be obtained on the occasion of controlling the ON and OFF state of the switch with said ON/OFF signal, generation of a pulse-shaped response can be avoided and generation of undesired signals inhibited.

Fig. 2 shows the block diagram of a main circuit for generating the burst waveform of a radio system to which the present invention is applied. In this figure, 4 is a hybrid circuit (combiner); 1 is a low-pass-filter (LPF); 2 is a modulator; 3 is a switch; 5 is a particular code generator; and 6 is an ON/OFF signal controller.

The data SO to be transmitted is temporarily stored in a memory, etc. (not shown) and it is transmitted by a burst from its own station. At this time, the particular codes generated by the particular code generator 5 are given in the preceding and succeeding areas of this data and in synchronization with the switch ON/OFF signal. In addition, although omitted in Fig. 2, a pseudo signal is also added in a time slot other than the own assigned time slot and thereby the continuous base band signal (modulated input data signal) can be obtained.

Thereafter, as in the case of existing time division signal transmission systems, band limitation is carried out by the LPF 1 and the carrier (not shown) is phase-modulated by the modulator 2. Then, switching is carried out by the switch 3 at the position corresponding to that, for example, between the particular inserted bits consisting of 1 and 0 and thereby the signal is transmitted in such a manner that the modulated wave is located in the time slot for its own station.

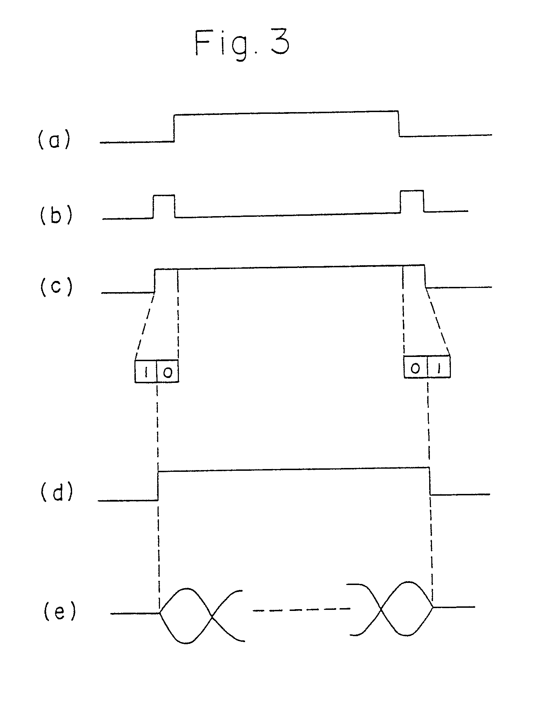

Fig. 3 shows waveforms for explaining the addition of said 1, 0 (or 0, 1) bits and for switching in 2-phase modulation. The waveform (a) shows the data block to be transmitted and this signal is sometimes partitioned by a PN signal at its front and rear ends. The waveform (b) shows the 1, 0 (or 0, 1) bits to be added. As shown in the waveform (c), the bits to be added are inserted at the front and rear ends of the data. For example, as shown in waveform (d), two bits of 1 and 0 are inserted at the front end of the data, and two bits of 0, 1 at the rear end.

The switching is carried out, as shown in (d), between bits in the modulated wave area corresponding to the particular codes of 1, 0 or 0, 1. Therefore, a modulated output as shown in Fig. 3(e) is obtained but the added particular codes occupy each bit respectively at the front and rear ends of the burst in the modulated wave output. Usually, guard bits are provided at the front and rear ends of the data in order to prevent interference resulting from the switching. Therefore, each bit added corresponds to a guard bit and it does not mean that the number of bits of data to be sent has increased.

Explained above is a system where modulation is carried out such that the absolute value of data corresponds to the phase of the modulated wave. It is useful for the present invention to be applied to a system which has differential phase modulation. In this case, data is incorporated by change of phase. 2-phase phase modulation is explained hereunder. For example, a state where there is no input signal is considered as "0". With this "0" considered as the initial value, a change of phase of π is effected in the modulated wave to be transmitted when the input signal is "1", whilst no change of phase is effected when the input signal is "0". Therefore, as explained above, a change of 100% in amplitude can be obtained to the modulated wave by using "1" as the first bit of the burst signal and as the first bit following said burst signal of the input data of the modulator. The system of the present invention can be applied not only to 2-phase phase modulation but also 4-phase and 8-phase phase modulation or that in more phases, including a modulation system having amplitude elements such as amplitude modulation (AM) and QAM (Quadrature Amplitude Modulation), etc.

As explained above, according to the present invention, generation of undesired signals, due to the switching can be prevented simply by adding a small number of bits.

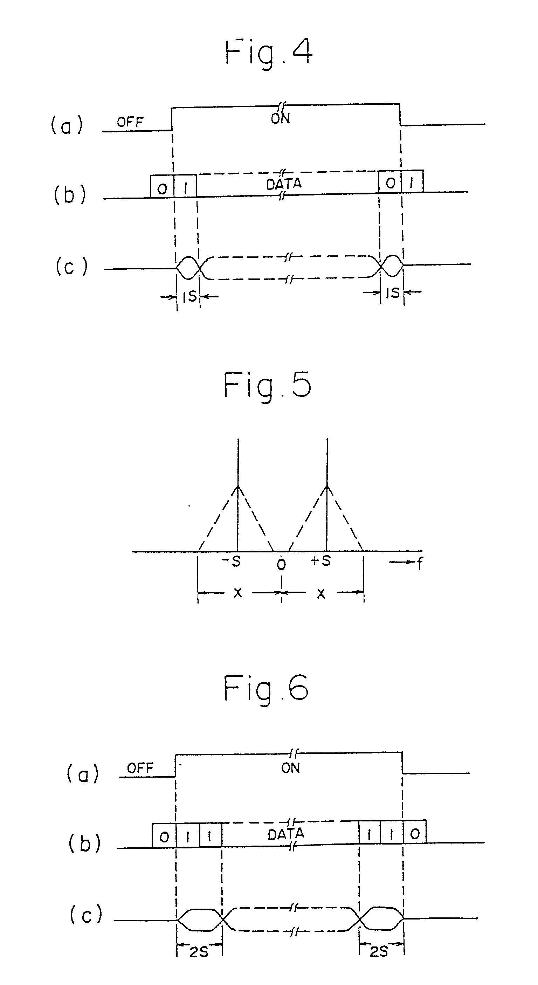

Fig. 4 and Fig. 5 explain the waveform and undesired waves in the case where the code is reversed in the input data signal for each symbol or bit (S) at the front and rear ends of the burst signal. In Fig. 4, (a) shows the ON/OFF signal for switching and (b) shows the input data signal. (c) shows the modulated wave envelope in the case where phase modulation or amplitude modulation is carried out by applying such data signal to the circuit shown in Fig. 2. Namely, as shown in (c), since the switching is carried out when the signal is subjected to the phase inversion or 100% amplitude modulation, the envelope at the front and the rear edges of burst signal becomes smooth and undesired signals must not be generated.

However, in practice, it is difficult to perfectly eliminate undesired signals generated by said ON/OFF operation because of imperfections in the switch itself.

Fig. 5 shows the generation of undesired signals based on the impulse response when the modulated wave is switched by the switch and it is obvious from this figure that the spectrum spreads widely from the center which is indicated by 0 on the frequency axis and is spaced by S in terms of the symbol or bit rate respectively in the upper and lower direction from the carrier position. In Fig. 5, with respect to the case shown in Fig. 4(c), the spectrum waveform for the case of 100% amplitude modulation of one bit to the front and rear ends of the burst signal is shown. Here, as explained above, the spectrum waveform appears at the point isolated by ±S (symbol or bit rate) from the center frequency and simultaneously the spectrum waveform of the undesired signals generated by the switching (ON/OFF) operation spreads.

In Fig. 5, for the convenience of explanation, the waveform is shown only having received phase inversion of 100% amplitude modulation at one bit spacing from the front and rear ends of the burst signal and not with a spectrum waveform where the amplitude modulation is carried out bit by bit even within the burst signal.

The spectrum of undesired signals spreading in the area indicated by ±x about the position 0 of the carrier indicated in Fig. 5, extends up to and outside the allowable band width, sometimes giving interference on other communication lines.

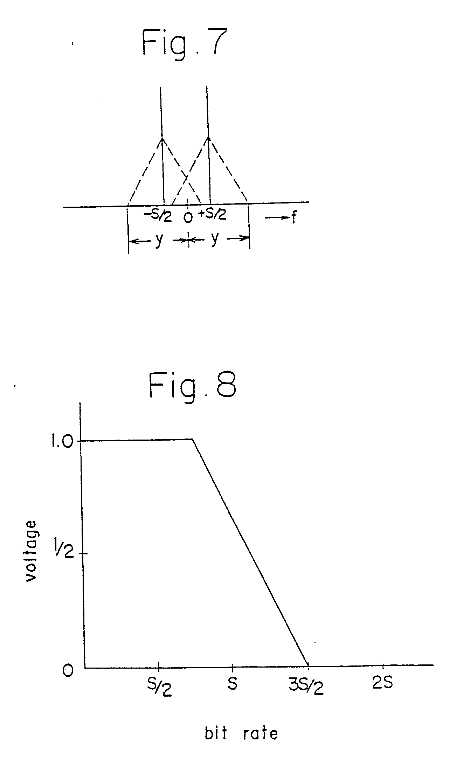

Alternatively, it is also possible that the 100% amplitude modulation can be carried out at points spaced by the time 2S or more from the front or rear end of the burst signal. Fig. 6 and Fig. 7 show the signal waveforms and undesired signals arising in the case of spacing by 2S.

In Fig. 6, (a) shows the ON/OFF signal for switching, while (b) shows the input data signal. Moreover, (c) shows the envelope of the modulated wave when phase modulation or amplitude modulation is carried out by applying the data signal shown in (b) to the circuit of Fig. 2. As shown in Fig. 6(b), 100% amplitude modulation can be realized at points spaced by the period 2S from the rising or falling ends of the burst signal as shown in Fig. 6(c) by causing the data signals for the first two symbols to be of the same polarity following the phase inversion or 100% amplitude modulation in synchronization with the rising edge of a rectangular wave signal and correspondingly for the last two data signals to be of the same polarity prior to the falling edge of the rectangular signal.

Fig. 7 shows the spectrum of the 100% amplitude modulated wave and the spread of the spectrum of unwanted waves based on the pulse response in the switch output for the case shown in Fig. 6. As is obvious from Fig. 7, the spectrum of the modulated signal and that of the undesired signals spread on both sides of the carrier point spaced by S/2 respectively in terms of bit rate on the upper and lower sides of the frequency axis located on the carrier position indicated by 0. In this case, the signal level of undesired signals in Fig. 7 is equal to that of the signal shown in Fig. 5 but the spectrum of the undesired signals is ±y, with the carrier existing at the center, which is significantly reduced as compared with that of Fig. 5 and therefore adverse effects on the other communication channels is also extensively reduced.

Namely, in the case of the embodiment shown in Fig. 6 and Fig. 7, a continuous polarity signal of at least two bits in length is set at the front and rear ends of burst signal and a bit rate at the time of ON/OFF is substantially reduced, with the view of narrowing the spectrum spread. Such an embodiment has the same structure as that shown in Fig. 2 and it is realized by setting the bit length formed by the particular code generator 5 to a value which assures continuation of the same polarity state at least for two bits at the front and rear ends of the burst signal.

Particularly, when using as a low-pass-filter for band limitation a roll-off filter which has a roll-off of 50% with a bit rate and voltage characteristic, as shown in Fig. 8, the application of the filter is very effective because it has a characteristic such that the frequency spectrum becomes zero at the point where the bit rate becomes $\pm 3/2S$.

Therefore, the spread of frequency spectrum is limited if as the same code condition continues longer at front and rear ends of the burst signal, but such an unchanged code condition is obtained as deliberately adding the particular codes to the data signal and it is undesirable to fix such an unchanged condition at too long a period since capacity for transmission of data is sacrificed thereby.

For this reason, it is considered to be extremely effective for practically realizing the present invention to set the bit length of the added particular codes to a length which assures continuation of the same code condition for two bits at the front and rear ends of the burst signal, since the spread of frequency spectrum is just absorbed by a 50% roll-off filter, which is commonly used.

Namely, the spectrum of the burst signal wherein the same code condition continues for two bits at the front and rear ends exists on the frequency points of $\pm(S/2)$, and is as shown in Fig. 7, and the spectrum of undesired signals spreads in the periphery of the spectrum at the points $\pm(S/2)$, and odd harmonics of the spectrum are generated by amplifier distortion. Among these harmonics, the 3rd order wave which is nearest to the center frequency comprises the most serious problem. Namely, harmonics are generated at a level lower than the initial spectrum at the frequencies of $\pm(S/2) \times 3$ and result in the undesired signals outside the pass-band as explained before.

Therefore, it is essential to prevent such 3rd order harmonics as much as possible. Where a 50% roll-off filter is used, a value of frequency spectrum at the points of $\pm(3/2)S$ can be set effectively to zero by causing the same code condition for two or more bits to continue at the front and rear ends of the burst signal. Thus, such an arrangement is very effective in preventing generation of undesired signals.

Although a comparatively simple modulation system, such as the above-mentioned 2-phase modulation, does not bring about significant problems, it is difficult for a 4-phase, 8-phase, to n-phase ($n = 2^m$; $m = 0, 1, 2, \ldots$) modulator to realize perfect 100% amplitude modulation with only the base band system, because of, for example, mismatching of the structural components, and therefore some carrier leak occurs in some cases.

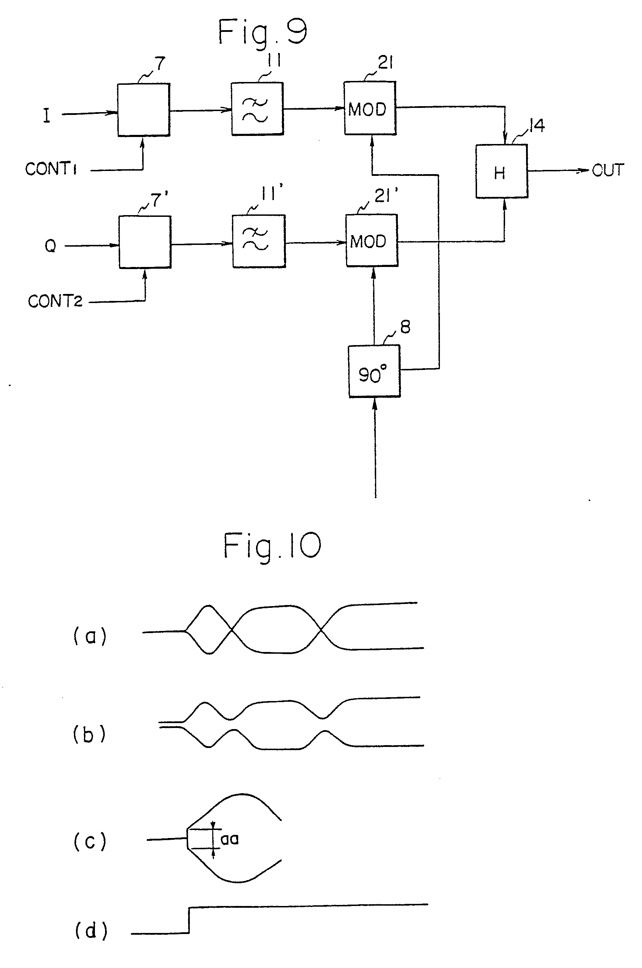

For example, in the case of 4-phase phase modulation, if, in the circuit of Fig. 9, the modulators 21, 21', the filters 11, 11' and hybrid 14 are ideal elements, the PN signals I, Q have the same amplitude and offset voltage of zero through the driver circuits 7, 7' and a perfect 4-phase modulated wave as shown in Fig. 10(a) can be obtained.

Namely, perfect π/0, 0/π modulations are carried out and therefore the modulated wave output is switched from zero as shown in Fig. 10(a), inhibiting generation of undesired signals.

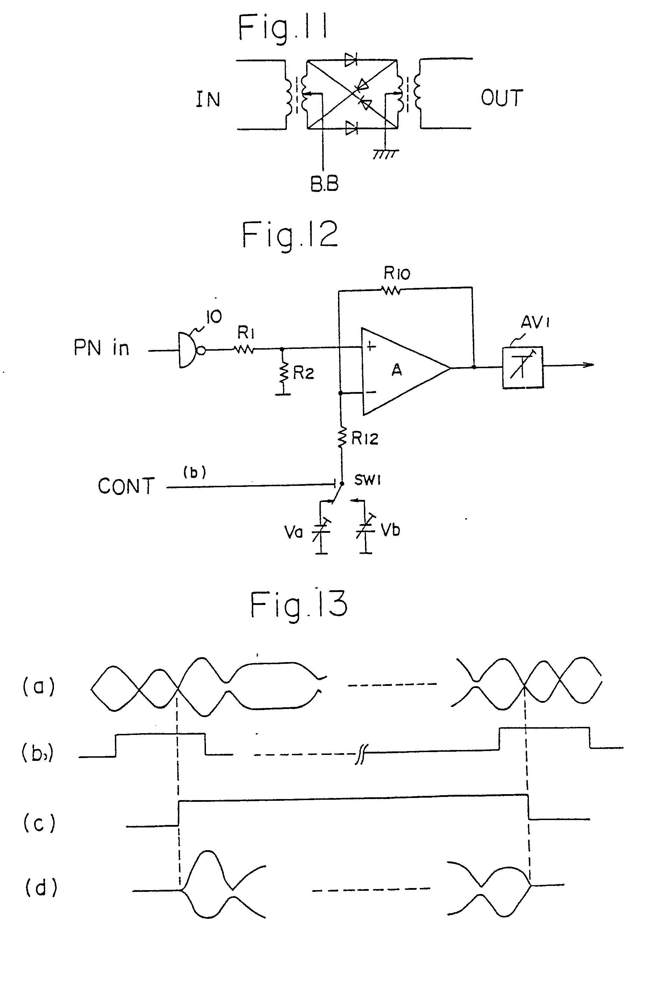

However, practically, a balance mixer as used in the modulators 21, 21' is structured as shown in Fig. 11 and is used as the 0/π modulator. In addition, in the normal case, the modulated wave amplitude and offset voltage are intentionally shifted because the hybrid 14, etc., are imperfect and the carrier is delayed and thereby equivalent 4-phase modulation can be realized as the 4-phase modulator output.

For this reason, the output often does not have a 100% amplitude modulated wave, as is shown in Fig. 10(b), and continues to generate carrier leak. If the modulated wave is controlled for switching at the timing shown in Fig. 10(d), the pulse waveform occurs only at the portion aa of Fig. 10(c). Therefore, it is difficult in this case to effectively suppress generation of undesired signals.

Particularly in such a case if, with the present invention, particular codes are added to the front and rear ends of the send data and in addition the offset voltage of the modulator driver is changed at only the front and rear ends of said data and burst signals, the modulated signal amplitudes at the time of switching can be at a zero crossing.

More specifically, this can be achieved by changing the offset voltages of driver circuits 7, 7' respectively for a constant period by the control signals CONT1, CONT2 in the timing of the burst ON/OFF signal in the 4-phase modulation circuit.

Fig. 12 shows a practical structure for said driver circuit 7. In this figure, 10 is a gate circuit and AV1 is the balance mixer.

Here, an offset voltage is at first set as Va in the normal condition and the amplitude of the base band signal is adjusted using the balance mixer AV1 and thereby imperfections of each element are compensated and the modulated signal can be obtained.

Thereafter, as shown in Fig. 13(b) on the occasion of executing switching at the timing shown in Fig. 13(c), the switch SW1 is changed over to the offset voltage Vb which is set, for example, so that the modulated wave of π/0 or 0/π always

shows zero-crossing at the time near the switching time.

As shown in Fig. 13(d), the burst signal generated herein shows inbalance of amplitude components at its front and rear edges. But such bits correspond to the particular codes added for realizing zero-crossing of the modulated waves at the time of switching and therefore such bits are, of course, not required to be sent effectively as data.

In the embodiment explained above, the modulated signals are caused forcibly to have zero-crossings at the time of switching and the offset voltage of the driver circuits for modulator are so controlled. Considering such characteristics, it is particularly effective to apply this embodiment of the invention into a modulation system, for example, wherein it is difficult to obtain perfect zero-crossings of amplitude in a multi-phase modulation system of 4-phases or more.

Explained above is a method of preventing generation of undesired signals at the time of switching by inserting particular codes into the positions corresponding to the front and rear ends of the burst signal and forcing 100% amplitude modulation.

It is also possible to use a method which effects switching at the points where the amplitude component is zero by interrupting an input signal to the driver circuit for a modulator or by keeping it to a constant voltage. Such a method is hereinafter explained, with reference to the drawings.

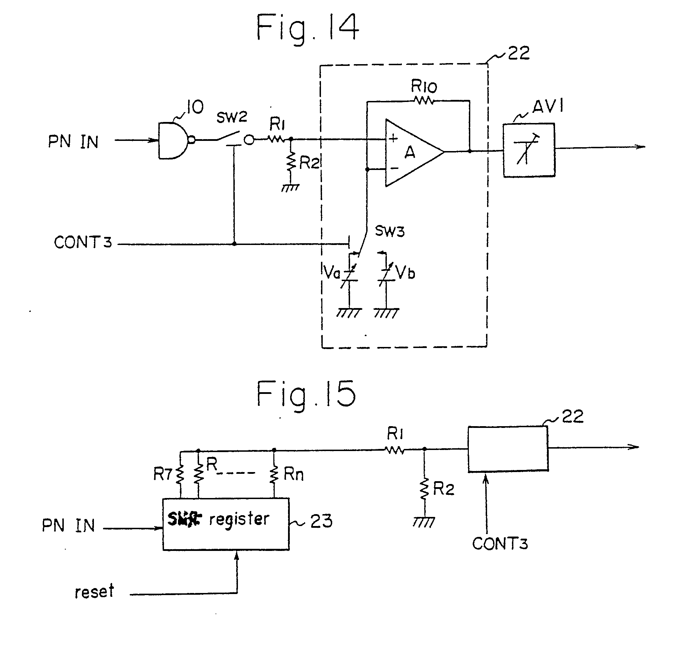

Fig. 14 shows the structure of a driver circuit similar to that of Fig. 12. In this figure, like parts to those of Fig. 12 are given the same reference numbers.

In Fig. 14, the switch SW2 is turned ON by the control signal CONT3 at the time of the burst data transmission, while the switch SW3 is set to the contact connected to the offset voltage Va. The amplitude, etc., of the input signal (base band signal) is adjusted so that the aforementioned 4-phase modulator output becomes the ideal modulated wave by adjusting the offset voltage Va and thereby imperfections of each element are compensated.

At the time of switching, the switch SW2 is set to OFF, while the switch SW3 is set to the contact connected to offset voltage Vb. When each circuit element is ideal, the modulated wave output becomes 0 if the offset voltage is set to 0 while an input signal is 0. However, since carrier leak occurs due to imperfections of elements, it is necessary to set the modulated wave output to 0 by cancelling carrier leak through adjustment of the offset voltage Vb.

Thereby, switching at the amplitude zero point becomes possible without generation of undesired signals.

In Fig. 14, the control signal CONT3 for controlling switching of the switches SW2, SW3 is generated in synchronization with the burst ON/OFF signal.

Fig. 15 shows an embodiment of a digital filter consisting of a shift register 23 in the preceding stage of the drive circuit 22 and the shift register 23 is reset with a reset signal at the time of switching and keeps its output voltage to a constant value. The same effect as the result of controlling the switch SW2 of Fig. 14, can be obtained by adjusting the offset voltage Va and Vb of the driver circuit as explained above with reference to such a constant voltage.

Also in the embodiment of Fig. 15, switching of the offset voltage Va, Vb of the driver circuit 22 is carried out by the control signal CONT3 being synchronized with the ON/OFF signal for switching.

The control of burst ON/OFF signal in relation to the switching of the modulated wave is explained hereafter.

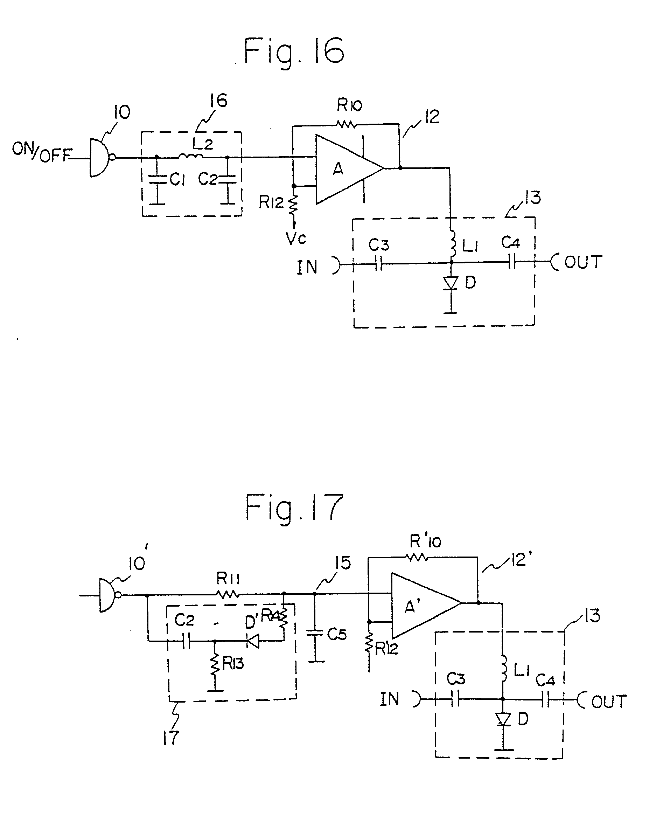

Fig. 16 shows a practical example of the switch circuit applied in the present invention. In this figure, 10 is a gate circuit for supplying the ON/OFF signal and 16 is a filter, for which, for example, a low-pass-filter consisting of a coil L2 and capacitors C1, C2 as shown in the figure are used. 12 is a DC amplifier, which comprises for example, an operational amplifier A having a DC feedback provided by a resistor R10, as shown in the figure, with a constant DC input applied through a resistor R12, which exhibits a very low output impedance and which outputs a positive voltage +V, or a negative voltage −V, corresponding to outputs "1", "0" of the filter 16.

13 is a switch circuit. The PIN diode D is turned ON and OFF by a control current via the choke coil L1 from the output of the DC amplifier 12, and thereby the input modulation signal output from the capacitors C3 and C4 is switched, thus outputting a burst signal output. As a filter for waveform shaping, not only the filter shown in Fig. 16 but also filters which have a specified time constant and which result in such a transient response as assuring smooth rising and falling edges at the front and rear edges of the output signal waveform, can be used.

As explained above, the switch circuit shown in Fig. 16 is very effective for reduction of undesired signals when the burst signal is generated, because it is not influenced by accumulated charges of the switching diode D since an amplifier having a low output impedance is used, and a burst signal output with a waveform conforming to the time constant of the filter 16, added for waveform shaping, can be obtained.

Fig. 17 shows another embodiment of a switch circuit applied to the present invention. In this figure, the gate circuit 10 and switch circuit 13 have the same structure as the circuits shown in Fig. 16. In addition, the resistor R11 and capacitor C5 form an integrating circuit which shapes the rising and falling edges of the ON/OFF signal supplied from the gate 10 into a smooth waveform. Moreover, 17 is a differentiating circuit which outputs a differentiated waveform of the ON/OFF signal through the capacitor C2 and resistor R13. However, the diode D′ shown in the figure is inserted in series in the differentiating circuit 17 and therefore differentiates only the ON/ OFF signal in a single direction, namely only the falling signal is differentiated and is output to the combining point 15. 12' is a DC amplifier which is different from the amplifier 12 shown in Fig. 12 and has a comparatively high output impedance. Therefore, if simply said amplifier 12' is used, the circuit is influenced by accumulated charges of the switching diode D. Thereby the response with respect to the falling signal of the ON/OFF signal is delayed, resulting in an adverse influence on transmission of burst signal.

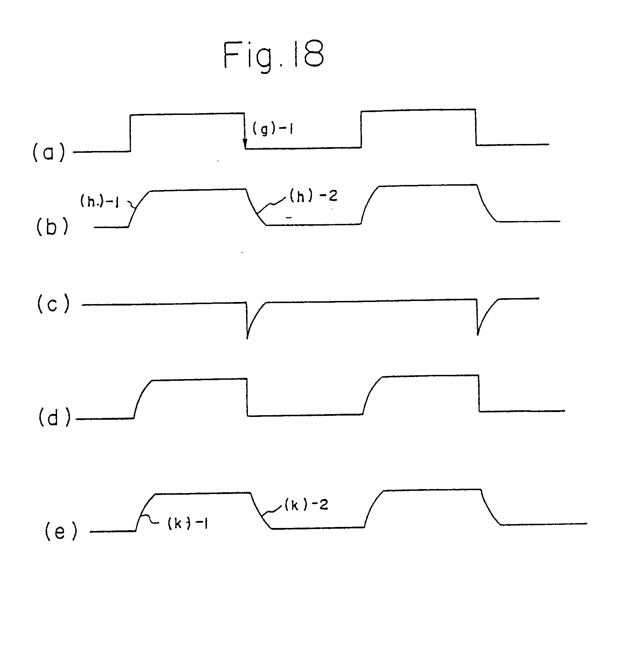

Fig. 18 shows the operational waveforms of the switch circuit shown in Fig. 17.

Fig. 18(a) shows the rectangular waveform output from the gate 10. As shown in Fig. 18(b), the rising waveform (h)—1 and falling waveform (h)—2 are shaped by the integration circuit consisting of the resistor R11 and capacitor C5.

In addition, the differentiating circuit 17 connected in parallel to the integration circuit differentiates only the falling edge (g)—1 of the rectangular wave and outputs a waveform as shown in Fig. 18(c).

As explained above, the ON/OFF characteristic in the switch circuit 13 shows deterioration in response at the falling edge due to the influence of accumulated charges of the switching diode D. For this reason, as shown in Fig. 18(d), when the switch 13 is controlled by a signal having only a sharp edge of the rising part satisfactory switching operation can be realized as shown in Fig. 18(e), where the time constants of the rising waveform (k)—1 and falling waveform (k)—2 are almost equal.

As explained above, according to the present invention, generation of undesired signals due to transient response can be prevented because reliable switching at the zero amplitude point becomes possible. Moreover, since the switching operation is carried out by the ON/OFF signal which is correspondingly waveform-shaped, undesired signal due to said switching operation can be reduced.

Therefore, time division communication can effectively be realized without unacceptable influence on other communication lines.

## Claims

1. A time division communication system wherein modulation input data is phase modulated or amplitude modulated and thereafter is transmitted as a burst signal in its own assigned time slot characterised in that particular data codes, independent of and not derived from the modulation data, are added to the modulation input data such that the modulated waveform has substantially 100% amplitude modulation at the points corresponding to the front and rear ends of the transmitted data burst signal and that the modulated signal is switched at these 100% amplitude modulation points, in response to an ON/OFF switching signal, and inserted in its assigned time slot.

2. A time division communication system according to claim 1, wherein on the adding of the particular codes to said modulation input data, the same code condition continues for the duration of at least two bits after and before, respectively, said modulated wave has received 100% amplitude modulation at the front end and rear end of said burst signal.

3. A time division communication system according to claim 1 or claim 2, wherein when executing phase modulation of amplitude modulation with said modulation input data, an offset voltage of a driving circuit for the modulator is changed only in the period corresponding to the front and rear ends of said send data burst such that switching is carried out, in response to the ON/OFF switching signal, at the point where the amplitude of said modulated wave effectively becomes zero.

4. A time division communication system according to claim 2, wherein band limitation of said modulation input is realized by filtering with a 50% roll-off characteristic.

5. A time division communication system as claimed in claim 3, wherein an input signal to a modulator driving circuit is intercepted or regulated to a constant voltage at least in the period corresponding to the front and rear ends of the corresponding data burst and a modulator offset voltage is changed such that switching occurs at the point where the amplitude of said modulated wave becomes zero.

6. A time division communication system according to any one of claims 1 to 5, wherein the rising and falling edges of the ON/OFF switching signal is shaped by a filter circuit on the occasion of the switching of said modulated wave and thereafter said ON/OFF signal is input to an amplifier having a low output impedance and switching realized by controlling the current of a switching diode of said amplifier output.

7. A time division communication system according to any one of claims 1 to 5, wherein on the occasion of the switching of said modulated wave, the ON/OFF switching signal is shaped by an integration circuit and is combined with a signal obtained by differentiating the falling edge of said ON/OFF signal, and the current of a switching diode is controlled by said combined signals to effect switching.

## Patentansprüche

1. Zeitmultiplex-Kommunikationssystem, bei dem die Modulationseingangsdaten phasenmoduliert oder amplitudenmoduliert werden und danach als Burstsignal in ihrem eigenen zugeordneten Zeitschlitz übertragen werden, dadurch gekennzeichnet, daß besondere Datencode, unabhängig von und nicht abgeleitet von den Modulationsdaten, zu den Modulationseingangsdaten addiert werden, so daß die modulierte Wellenform eine im wesentlichen 100%ige Amplitudenmodulation an den Punkten hat, die den vorderen und hinteren Enden des übertragenen Datenburstsignals entsprechen, und daß das modulierte Signal an diesen 100%-Amplitudenmodulationspunkten in Abhängigkeit von einem EIN/AUS-Schaltsignal geschaltet und in seinen zugeordneten Zeitschlitz eingefügt wird.

2. Zeitmultiplex-Kommunikationssystem nach Anspruch 1, bei dem bei dem Addieren der besonderen Code zu den Modulationseingangsdaten derselbe Codezustand während der Dauer von wenigstens zwei Bits nach dem bzw. bevor die genannte Modulationswelle 100%ige Amplitudenmodulation am vorderen Ende und am hinteren Ende des genannten Burstsignal empfangen hat, anhält.

3. Zeitmultiplex-Kommunikationssystem nach Anspruch 1 oder 2, bei dem dann, wenn die Phasenmodulation oder die Amplitudenmodulation mit den Phasenmodulationseingangsdaten durchgeführt wird, eine Versetzungsspannung einer Treiberschaltung für den Modulator nur in der Periode geändert wird, die den vorderen und hinteren Enden der genannten Sendedatenbursts entsprechen, so daß die Schaltung, in Abhängigkeit von dem EIN/AUS-Schaltsignal, bei dem Punkt durchgeführt wird, wo die Amplitude der genannten modulierten Welle effektiv null wird.

4. Zeitmultiplex-Kommunikationssystem nach Anspruch 2, bei dem eine Bandbegrenzung des genannten Modulationseinganges durch Filtern mit einer 50%igen Abroll-Charakteristik realisiert wird.

5. Zeitmultiplex-Kommunikationssystem nach Anspruch 3, bei dem ein Eingangssignal zu der Modulatortreiberschaltung wenigstens in der Periode, die den vorderen und hinteren Enden des entsprechenden Datenbursts entspricht, aufgefangen oder auf eine konstante Spannung geregelt wird, und eine Modulatorversetzungsspannung so geändert wird, daß die Schaltung an dem Punkt eintritt, wo die Amplitude der genannten modulierten Welle null wird.

6. Zeitmultiplex-Kommunikationssystem nach einem der Ansprüche 1 bis 5, bei dem die ansteigende und die abfallende Flanke des EIN/AUS-Schaltsignals durch eine Filterschaltung, bei der Gelegenheit der Schaltung der genannten modulierten Welle, geformt wird, und danach das genannte EIN/AUS-Signal in einen Verstärker eingegeben wird, der eine niedrige Ausgangsimpendanz hat und die Schaltung durch die Steuerung des Stromes einer Schaltdiode des genannten Verstärkerausgangs realisiert wird.

7. Zeitmultiplex-Kommunikationssystem nach einem der Ansprüche 1 bis 5, bei dem bei Gelegenheit der Schaltung der genannten modulierten Welle das EIN/AUS-Schaltsignal durch eine Integrationsschaltung geformt und mit einem Signal kombiniert wird, das durch Differenzierung der abfallenden Flanke des genannten EIN/AUS-Signals erhalten wird, und der Strom der Schaltdiode durch die genannten kombinierten Signale gesteuert wird, um die Schaltung zu bewirken.

**Revendications**

1. Système de communication par division du temps dans lequel des données d'entrée de modulation sont modulées en phase ou modulées en amplitude et sont transmises ensuite comme signal en rafale dans sa propre tranche de temps affectée, caractérisé en ce que des codes de données particuliers, indépendants de et non dérivés des données de modulation, sont ajoutés aux données d'entrée de moudlation de telle sorte que la forme d'onde modulée a essentiellement une modulation d'amplitude à 100% aux points correspondant aux extrémités de tête et de queue du signal en rafale de données transmises et que le signal modulé est interrompu à ces points de modulation d'amplitude à 100%, en réponse à un signal d'interruption par mise en circuit/hors circuit, et inséré dans sa tranche de temps affectée.

2. Système de communication par division du temps selon la revendication 1, dans lequel en ajoutant les codes particuliers aux données d'entrée de modulation, la même condition de code se maintient pendant la durée d'au moins deux bits respectivement après et avant que l'onde modulée ait subi une modulation d'amplitude à 100% aux extrémités de tête et de queue du signal en rafale.

3. Système de communication par division du temps selon l'une quelconque des revendications 1 et 2, dans lequel, pendant l'exécution d'une modulation de phase ou d'une modulation d'amplitude avec les données d'entrée de modulation, une tension de suppression d'un circuit de commande destiné au modulateur n'est changée que pendant la période correspondant aux extrémités de tête et de queue du signal en rafale de données envoyées de telle sorte qu'une interruption est exécutée en réponse au signal d'interruption par mise en circuit/hors circuit au point où l'amplitude de l'onde modulée devient effectivement nulle.

4. Système de communication par division du temps selon la revendication 2, dans lequel une limitation de bande des données d'entrée de modulation est réalisée par filtrage avec une caractéristique d'élimination de 50%.

5. Système de communication par division du temps selon la revendication 3, dans lequel un signal d'entrée d'un circuit de commande de modulateur est intercepté ou réglé à une tension constante au moins dans la période correspondant aux extrémités de tête et de queue du signal en rafale de données correspondant et une tension de suppression de modulateur est changée de telle sorte que se produit une interruption au point où l'amplitude de l'onde modulée devient nulle.

6. Système de communication par division du temps selon l'une quelconque des revendications 1 à 5, dans lequel les bords de croissance et de décroissance du signal d'interruption par mise en circuit/hors circuit sont mis en forme par un circuit de filtrage à l'occasion de l'interruption de l'onde modulée et le signal de mise en circuit/hors circuit est ensuite introduit dans un amplificateur ayant une faible impédance de sortie, l'interruption étant réalisée en réglant le courant d'une diode d'interruption de la sortie de l'amplificateur.

7. Système de communication par division du temps selon l'une quelconque des revendications 1 à 5, dans lequel, à l'occasion de l'interruption de l'onde modulée, le signal d'interruption par mise en circuit/hors circuit est mis en forme par un circuit d'intégration et est combiné avec un signal obtenu en différentiant le bord décroissant du signal de mise en circuit/hors circuit, et le courant d'une diode d'interruption est réglé par les signaux combinés pour effectuer une interruption.

# Fig. 1

(a)

(b)

(c)

(d)

(e)

# Fig. 2

# Fig. 3

(a)

(b)

(c)

| I | O |
|---|---|

| O | I |
|---|---|

(d)

(e)

0 075 601

## Fig.4

(a) OFF / ON

(b) 0 1 / DATA / 0 1

(c) 1S ... 1S

## Fig.5

-S  0  +S  →f
X  X

## Fig.6

(a) OFF / ON

(b) 0 1 1 / DATA / 1 1 0

(c) 2S ... 2S

3

# Fig. 7

# Fig. 8

# Fig.9

I → [7] → [≈ 11] → [MOD 21] → [H 14] → OUT

CONT1 →

Q → [7'] → [≈ 11'] → [MOD 21']

CONT2 →

[90° 8]

# Fig.10

(a)

(b)

(c) αα

(d)

# Fig.11

IN

OUT

B.B

# Fig.12

PN in

R1

R2

R10

A

AV1

R12

CONT ——— (b)

SW1

Va    Vb

# Fig.13

(a)

(b₂)

(c)

(d)

# Fig. 14

# Fig. 15

## Fig. 16

## Fig. 17

# Fig.18

(a)

(g)-1

(b)

(h.)-1    (h)-2

(c)

(d)

(e)

(k)-1    (k)-2